# EUROPÄISCHE PATENTSCHRIFT

(11) **EP 2 424 756 B1**
(45) Veröffentlichungstag und Bekanntmachung des Hinweises auf die Patenterteilung: **06.01.2016**
(21) Anmeldenummer: 10713691.3
(22) Anmeldetag: 19.04.2010
(51) Int. Cl.: B60T 8/88, B60T 8/34, B60T 8/48, B60T 8/40

(54) **SCHLUPFGEREGELTE HYDRAULISCHE FAHRZEUGBREMSANLAGE**
SLIP CONTROLLED HYDRAULIC VEHICLE BRAKING SYSTEM
SYSTEME DE FREINAGE HYDRAULIQUE POUR VEHICULE A REGULATION DE GLISSEMENT

(30) Priorität: 28.04.2009 DE 102009002695; 15.10.2009 DE 102009045714
(43) Veröffentlichungstag der Anmeldung: 07.03.2012
(73) Patentinhaber: Continental Teves AG & Co. oHG, 60488 Frankfurt (DE)
(72) Erfinder: LINKENBACH, Steffen, 65760 Eschborn (DE); JUNGBECKER, Johann, 55576 Badenheim (DE); SCHIEL, Lothar, 65719 Hofheim (DE); DRUMM, Stefan A., 55291 Saulheim (DE)
(86) Internationale Anmeldenummer: PCT/EP2010/055098
(87) Internationale Veröffentlichungsnummer: WO 2010/124952

(56) Entgegenhaltungen:
- EP-A1- 0 280 740
- EP-A1- 0 581 105
- EP-A2- 0 265 623
- WO-A1-99/39954
- WO-A1-2008/025797
- US-A- 6 123 397

## Beschreibung

Die vorliegende Erfindung betrifft ein Verfahren zum Betreiben einer Bremsanlage nach dem Oberbegriff des Patentanspruchs 1 sowie eine schlupfgeregelte hydraulische Fahrzeugbremsanlage nach dem Oberbegriff des Patentanspruchs 9.

Eine Fahrzeugbremsanlage ist beispielsweise aus der internationalen Patentanmeldung WO 2008/017548 bekannt. Bei der vorbekannten, vorzugsweise zweikreisigen Bremsanlage ist ein hydraulischer Leitungsabschnitt, der die Ausgangsanschlüsse von Auslassventilen eines Bremskreises verbindet, an einen Druckmittelvorratsbehälter sowie an die Saugseite einer hydraulischen Pumpe angeschlossen, deren Druckseite über Einlassventile mit Fahrzeugradbremsen verbunden ist.

Als nachteilig wird bei der bekannten Fahrzeugbremsanlage die Tatsache angesehen, dass eine Undichtigkeit eines Auslassventils eine Verlängerung des Bremspedalbetätigungsweges zur Folge hat, wobei, wenn der zugeordnete Druckraum des Hauptbremszylinders erschöpft ist, der daran angeschlossene Bremskreis ausfällt.

Aus der EP 0 280 740 A1 ist eine gattungsgemäße Fahrzeugbremsanlage mit einem Druckmittelvorratsbehälter, einem mittels eines Bremspedals betätigbaren Hauptbremszylinder und einem Einlassventil sowie einem ersten Auslassventil je Radbremse bekannt. Dabei sind die vier ersten Auslassventile über einen gemeinsamen Leitungsabschnitt, in welchem ein zweites Auslassventil angeordnet ist, mit dem Druckmittelvorratsbehälter verbunden.

In der US6123397A wird eine Bremsanlage offenbart, welche ein Druckabbauventil je Radbremse umfasst, wobei die vier Druckabbauventile über eine gemeinsame Verbindungsleitung, in der ein Ausgleichsbehälterschließventil angeordnet ist, mit einem Ausgleichsbehälter verbindbar sind. Weiterhin wird ein Prozess zum Überprüfen der Rohrleitungen im System beschrieben, in welchem geprüft wird, ob ein Leck in der gemeinsamen Verbindungsleitung zum Ausgleichsbehälter vorliegt oder ob die Druckabbauventile und das Ausgleichsbehälterschließventil ordnungsgemäß öffnen.

Es ist Aufgabe der vorliegenden Erfindung, bei einer Fahrzeugbremsanlage der eingangs genannten Gattung Maßnahmen vorzuschlagen, die eine Erhöhung der Betriebssicherheit ermöglichen.

Diese Aufgabe wird erfindungsgemäß durch ein Verfahren gemäß Anspruch 1 und eine Fahrzeugbremsanlage gemäß Anspruch 9 gelöst.

Die Erfindung ermöglicht eine verbesserte Prüfung der Dichtheit der Auslassventile.

Vorteilhafte Weiterbildungen der Fahrzeugbremsanlage nach der Erfindung sind in den Unteransprüchen 10 bis 15 angegeben, während weitere vorteilhafte Merkmale des beanspruchten Verfahrens in den Unteransprüchen 2 bis 9 aufgeführt sind.

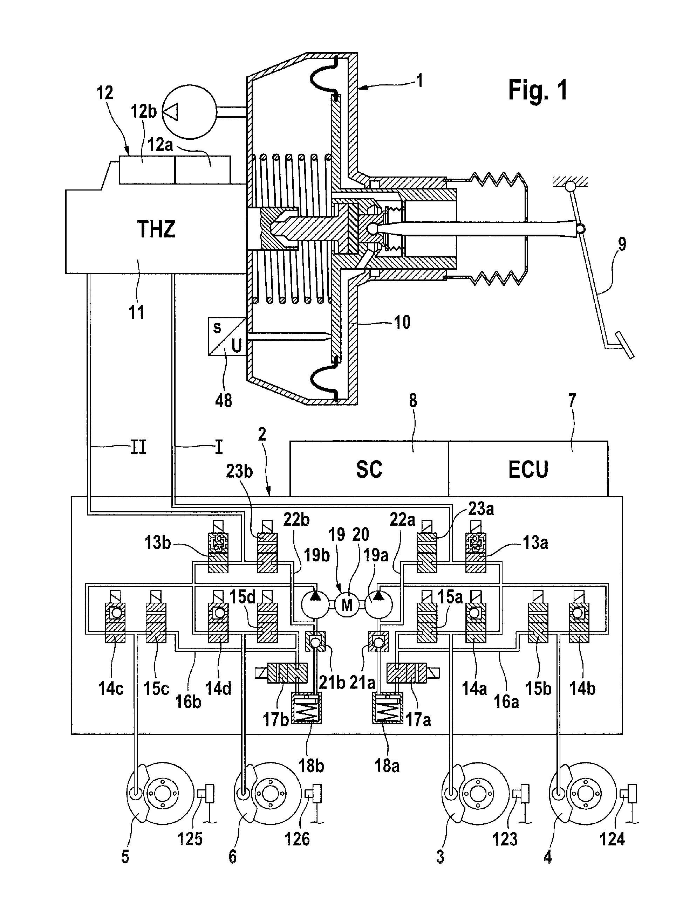

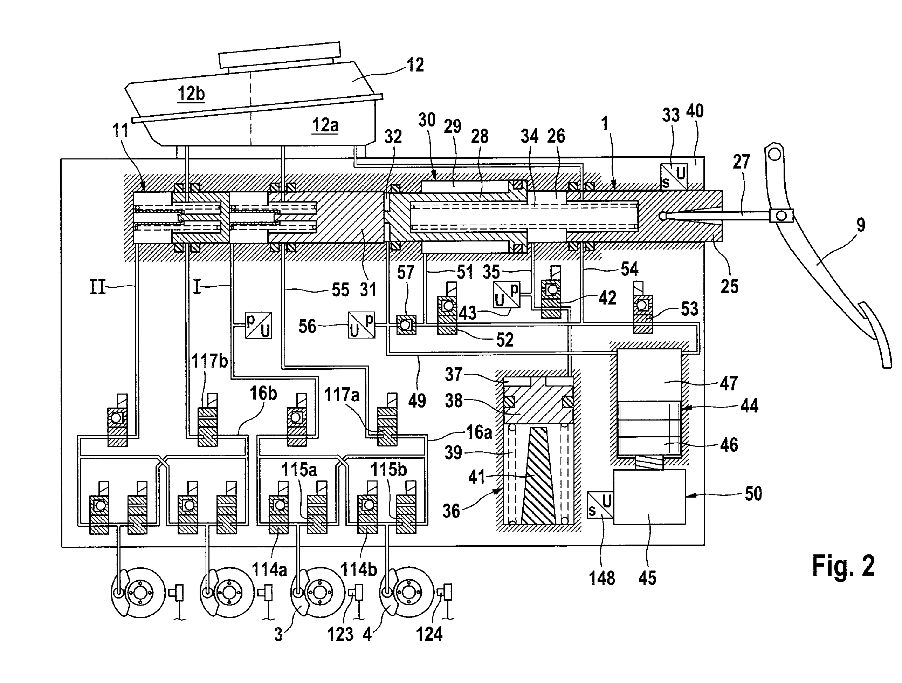

Die Erfindung wird nachfolgend anhand zweier in der beiliegenden Zeichnung dargestellter Ausführungsbeispiele näher erläutert. Die Figuren 1 und 2 zeigen dabei je einen hydraulischen Schaltplan einer ersten sowie einer zweiten Ausführung einer erfindungsgemäßen Fahrzeugbremsanlage.

Die in Fig. 1 gezeigte erste Ausführungsform der erfindungsgemäßen Fahrzeugbremsanlage ist zur Durchführung von Schlupfregelvorgängen, insbesondere Blockierschutzregelung ABS, Antriebsschutzregelung ASR sowie Fahrdynamikregelung ESP vorgesehen. Die Bremsanlage, die vorzugsweise zwei Bremskreise I, II aufweist, besteht im Wesentlichen aus einer Betätigungseinheit 1, einer an die Betätigungseinheit 1 angeschlossenen Radbremsdruckmodulationseinrichtung 2, an die Radbremsdruckmodulationseinrichtung 2 angeschlossenen Radbremsen 3, 4, 5, 6 sowie einer der Radbremsdruckmodulationseinrichtung 2 zugeordneten elektronischen Steuer- und Regeleinheit 7. Mit dem Bezugszeichen 8 ist ein Sensorcluster bezeichnet, der die für die Durchführung der oben erwähnten Regelvorgänge erforderlichen Sensoren umfasst, deren Ausgangssignale der elektronischen Steuer- und Regeleinheit 7 zugeführt werden. Die Zuordnung der Radbremsen 3-6 zu den Bremskreisen I, II ist dabei beispielsweise derart getroffen, dass die an den ersten Bremskreis I angeschlossenen Radbremsen 3, 4 der Fahrzeughinterachse zugeordnet sind, während die an den zweiten Bremskreis II angeschlossenen Radbremsen 5, 6 der Abbremsung der Fahrzeugvorderachse dienen. Der direkten Erfassung der Raddrehzahlen sowie der indirekten Erfassung der in den Radbremsen 3 bis 6 bei einem Bremsvorgang eingesteuerten Druckes dienen Raddrehzahlsensoren 123, 124, 125, 126.

Wie Fig. 1 weiterhin zu entnehmen ist, besteht die Betätigungseinheit 1 aus einem vorzugsweise pneumatischen Bremskraftverstärker 10 sowie einem dem Bremskraftverstärker 10 wirkungsmäßig nachgeschalteten zweikreisigen Hauptbremszylinder 11, an dessen nicht dargestellte Druckräume die vorhin erwähnten Bremskreise I, II angeschlossen sind. Der Betätigung der beschriebenen Baugruppe dient ein Bremspedal, das mit dem Bezugszeichen 9 versehen ist. Außerdem steht der Hauptbremszylinder 11 mit einem Druckmittelvorratsbehälter 12 in Verbindung, dessen Kammern 12a, 12b den Hauptzylinder-Druckräumen bzw. den Bremskreisen I, II zugeordnet sind. Der Betätigungsweg des Bremspedals 9 wird mittels eines Wegsensors 48 erfasst, der den bei einer Betätigung von der beweglichen Wand des Bremskraftverstärkers 10 zurück gelegten Weg sensiert.

Die Radbremsdruckmodulationseinrichtung 2 umfasst an die Bremskreise I, II angeschlossene, als stromlos offene (SO-) 2/2-Wegeventile ausgebildete Trennventile 13a, 13b, an deren Ausgänge den Radbremsen 3-6 zugeordnete Einlassventile 14a-d angeschlossen sind, die in ihrer stromlos offenen Grundstellung einen gemeinsamen Druckauf- und Abbau, sowie bei elektronischer Ansteuerung einen radindividuell unterschiedlichen Aufbau eines hydraulischen Druckes in den Radbremsen 3-6 ermöglichen. Ein radindividuell unterschiedlicher Abbau des in den Radbremsen 3-6 eingesteuerten Druckes erfolgt über Auslassventile 15a-d, wobei die Ausgänge der den Bremskreisen I, II zugeordneten Auslassventile 15a, 15b und 15c, 15d mit je einem gemeinsam genutzten Leitungsabschnitt 16a, 16b verbunden sind. Die Leitungsabschnitte 16a, 16b führen zu je einem Sicherheitsauslassventil 17a, 17b, dessen Ausgang an je einen hydraulischen Niederdruckspeicher 18a, 18b angeschlossen ist. Außerdem ist jedem Bremskreis I, II ein Kreis 19a, 19b einer zweikreisigen hydraulischen Pumpe 19 zugeordnet, die mittels eines Elektromotors 20 angetrieben wird und deren Saugseite über zum Niederdruckspeicher 18a, 18b schließende Rückschlagventile 21a, 21b an die Niederdruckspeicher 18a, 18b angeschlossen ist. Vom Abschnitt zwischen dem Rückschlagventil 21a, 21b und der Pumpe 19 bzw. 19a, 19b zweigt ein weiterer Leitungsabschnitt 22a, 22b ab, der unter Zwischenschaltung je eines stromlos geschlossenen (SG-) 2/2-Wegeventils 23a, 23b an den Eingangsanschluss des vorhin erwähnten Trennventils 13a, 13b bzw. den Bremskreis I, II angeschlossen ist. Sämtliche in diesem Zusammenhang beschriebenen Ventile sind als elektromagnetisch betätigbare 2/2-Wegeventile ausgeführt, wobei insbesondere die den einzelnen Radbremsen 3-6 zugeordneten Paare der Einlass- und Auslassventile zu einem 3/2-Wegeventil zusammengefasst werden können. Dabei sind die Einlassventile 14a-d als stromlos offene (SO-) 2/2-Wegeventile ausgeführt, die in bestromtem Zustand die Funktion zur Radbremse 3-6 schließender Rückschlagventile erfüllen, während die Auslassventile 15a-d sowie die Sicherheitsauslassventile 17a, 17b als stromlos geschlossene (SG-) 2/2-Wegeventile ausgebildet sind.

Bei einer Prüfung der Dichtheit, die während einer Druckhaltephase beispielsweise bei einem der Fahrzeugvorderachse zugeordneten Auslassventile 15a oder 15b durchgeführt wird, sind sowohl die Einlassventile 14a, 14b als auch die erwähnten Auslassventile 15a, 15 b geschlossen. Zum Zweck der Dichtheitsprüfung wird nun das entsprechende Sicherheitsauslassventil 17a geöffnet. Ist nun ein der beiden Auslassventile 15a bzw. 15b undicht, erfolgt ein Abströmen des Druckmittels aus der zugeordneten Radbremse 3 bzw. 4 über das undichte Auslassventil 15a bzw. 15b in den Niederdruckspeicher 18a. Die dadurch entstehende nachlassende Bremswirkung wird am entsprechenden Ausgangssignal eines der vorhin erwähnten Drehzahlsensoren 123 bzw. 124 erkannt.

Bei einer Prüfung der Dichtheit des Sicherheitsauslassventils 17a wird beispielsweise das Einlassventil 14b geschlossen, während das entsprechende Auslassventil 15b geöffnet wird. Bei einer Undichtigkeit am Sicherheitsauslassventil 17a erfolgt ein Abströmen des Druckmittels in den Niederdruckspeicher 18a, was einen Druckmittelverlust und somit eine nachlassende Bremswirkung der Radbremse 4 zur Folge hat. Die nachlassende Bremswirkung wird wieder am entsprechenden Ausgangssignal des Drehzahlsensors 124 erkannt. Die gleiche Vorgehensweise gilt selbstverständlich auch für das andere Ein- und Auslassventilpaar 14a, 15a.

Die Fig. 2 der beiliegenden Zeichnung zeigt eine elektrohydraulische Bremsanlage, die insbesondere in der sog. "Brake-by-wire"-Betriebsart betrieben werden kann. Dabei sind die Bestandteile der in Fig. 2 dargestellten Bremsanlage, die den in Fig. 1 gezeigten Komponenten entsprechen, mit den gleichen Bezugszeichen versehen. Die Betätigungseinheit 1 weist einen ersten Kolben 25 auf, der einen hydraulischen Druckraum 26 begrenzt und der über eine Betätigungskräfte übertragende Druckstange 27 mit dem Bremspedal 9 gekoppelt ist. Der Betätigungsweg des Bremspedals 9 wird mittels eines vorzugsweise redundant ausgeführten Wegsensors 33 erfasst, der den Weg des ersten Kolbens 25 sensiert. Der Druckraum 26 ist mit dem Druckmittelvorratsbehälter 12 verbindbar, wobei diese Verbindung durch eine Relativbewegung des ersten Kolbens 25 gegenüber einem lediglich schematisch angedeuteten Gehäuse 40 absperrbar ist, in dem der erste Kolben 25 geführt wird. Der Betätigungseinheit 1 ist wirkungsmäßig eine Pedalentkopplungseinheit 30 nachgeschaltet, die im Wesentlichen durch einen ebenfalls im Gehäuse 40 geführten zweiten Kolben 28 sowie eine vom zweiten Kolben 28 im Gehäuse 40 begrenzte hydraulische Kammer 29 gebildet wird, deren Druckbeaufschlagung eine Bewegung des zweiten Kolbens 28 in Betätigungsrichtung verhindert wird. Der zweite Kolben 28 stellt eine zweite Begrenzung des vorhin erwähnten hydraulischen Raums 26 dar, wobei zwischen den beiden Kolben 25, 28 eine Rückstellfeder angeordnet ist, die mit dem Bezugszeichen 34 versehen ist. Außerdem ist der zweite Kolben 28 in eine kraftübertragende Verbindung mit einem ersten bzw. Primärkolben 31 des Hauptbremszylinders 11 bringbar, wobei zwischen dem zweiten Kolben 28 und dem Primärkolben 31 ein mit hydraulischem Druck beaufschlagbarer Zwischenraum 32 vorgesehen ist, dessen Druckbeaufschlagung den zweiten Kolben 28 und den Primärkolben 31 in entgegen gesetzten Richtungen belastet.

Weiterhin ist Fig. 2 zu entnehmen, dass der vorhin erwähnte Druckraum 26 über eine absperrbare Verbindungsleitung 35 mit einer hydraulisch betätigbaren Wegsimulationseinrichtung 36 in Verbindung steht. Die Wegsimulationseinrichtung 36 weist eine Simulatorkammer 37 auf, die von einem Simulatorkolben 38 begrenzt wird. Dabei wirkt der Simulatorkolben 38 mit einer Simulatorfeder 39 sowie einer der Simulatorfeder 39 parallel geschalteten Elastomerfeder 41 zusammen. Das Absperren der Verbindungsleitung 35 erfolgt mittels eines Simulatorabsperrventils 42, das als ein elektromagnetisch betätigbares, stromlos offenes (SO-) 2/2-Wegeventil ausgebildet ist, das in bestromtem Zustand die Funktion eines zur Simulatorkammer 37 schließenden Rückschlagventils erfüllt. Ein Drucksensor 43 dient der Erfassung des im Druckraum 26 herrschenden Druckes.

Um die vorhin genannte "Brake-by-wire"-Betriebsart zu realisieren, ist eine elektrohydraulische Druckbereitstellungseinrichtung 50 vorgesehen, die aus einer hydraulischen Zylinder-Kolben-Anordnung 44 sowie einem elektromechanischen Aktuator 45 gebildet ist. Der elektromechanische Aktuator 45 ist dabei als ein Elektromotor mit einem Untersetzungsgetriebe ausgeführt, der eine translatorische Bewegung eines Kolbens 46 gewährleistet, so dass in einem Druckraum 47 der hydraulischen Zylinder-Kolben-Anordnung 44 ein hydraulischer Druck aufgebaut wird. Die Bewegung des Kolbens 46 wird indirekt durch einen dem Aktuator 45 zugeordneten Wegsensor 148 erfasst. Um den vorhin erwähnten Zwischenraum 32 bei einer "Brake-by-wire"-Bremsung mit hydraulischem Druck zu beaufschlagen, ist zwischen dem Druckraum 47 der hydraulischen Zylinder-Kolben-Anordnung 44 und dem Zwischenraum 32 eine erste Verbindungsleitung 49 vorgesehen, an die ein erster Drucksensor 56 angeschlossen ist. Eine zweite Verbindungsleitung 51, in der ein zweites, elektromagnetisch betätigbares, stromlos offenes (SO-) 2/2-Wegeventil 52 eingefügt ist, bildet eine absperrbare hydraulische Verbindung zwischen der hydraulischen Kammer 29 und dem Druckraum 47 der hydraulischen Zylinder-Kolben-Anordnung 44. Dabei ist zwischen der ersten Verbindungsleitung 49 und der zweiten Verbindungsleitung 51 ein zum Zwischenraum 32 schließendes Rückschlagventil 57 geschaltet. In der zweiten Verbindungsleitung 51 ist dem zweiten 2/2-Wegeventil 52 ein drittes elektromagnetisch betätigbares, stromlos offenes (SO-) 2/2-Wegeventil 53 vorgeschaltet, an dessen Ausgangsanschluss eine dritte Verbindungsleitung 54 angeschlossen ist, die mit dem Druckmittelvorratsbehälter 12 verbunden ist.

Die Zuordnung der Radbremsdruckmodulationsventile bzw. der Ein- und Auslassventile sowie der Sicherheitsauslassventile den einzelnen Bremskreisen I, II entspricht der vorhin erläuterten Fig. 1 bis auf die Tatsache, dass die den erwähnten Ventilen zugeordneten Bezugszeichen in Fig. 2 um 100 erhöht wurden. Die Ausgangsanschlüsse der Sicherheitsauslassventile 117a, 117b stehen dabei über Druckabbauleitungen 55, - in ständiger Verbindung mit den den einzelnen Bremskreisen I, II zugeordneten Kammern 12a, 12b des Druckmittelvorratsbehälters 12.

Bei einer Prüfung der Dichtheit, die während einer Bremsung beispielsweise bei einem der Fahrzeugvorderachse zugeordneten Auslassventile 115a oder 115b durchgeführt wird, sind die Einlassventile 114a, 114b geöffnet, während die erwähnten Auslassventile 115a, 115b geschlossen sind. Zum Zweck der Dichtheitsprüfung wird nun das entsprechende Sicherheitsauslassventil 117a geöffnet. Ist eines der beiden Auslassventile 115a bzw. 115b undicht, erfolgt ein Abströmen des Druckmittels aus der zugeordneten Radbremse 3 bzw. 4 über das undichte Auslassventil 115a bzw. 115b in die dem Bremskreis I zugeordnete Kammer 12a des Druckmittelvorratsbehälters 12. Durch Überwachung des Volumenverbrauchs mit Hilfe des Wegsensors 148 wird bei einem undichten Auslassventil bzw. Sicherheitsauslassventil ein in Bezug zum Hauptbremszylinderdruck übermäßiger Volumenverbrauch festgestellt. Dabei wird anhand der zeitlichen Zuordnung des Auftretens eines zusätzlichen Volumenverbrauchs zu den einzelnen Ventilöffnungsaktionen festgestellt, ob eines der Auslassventile oder das Sicherheitsauslassventil die Undichtigkeit aufweist. Nach Entdeckung einer Undichtigkeit in einem der Auslassventile wird anschließend detektiert, welches der beiden Auslassventile des betreffenden Bremskreises undicht ist. Hierfür werden die entsprechenden Einlassventile 114a, 114b geschlossen, so dass den Radbremsen 3, 4 kein Druckmittelvolumen von der elektrohydraulischen Druckbereitstellungseinrichtung 50 zugeführt werden kann. Durch eine Undichtigkeit eines der beiden Auslassventile 115a bzw. 115b lässt die Bremswirkung an der zugeordneten Radbremse 3 bzw. 4 nach und wird am entsprechenden Ausgangssignal eines der vorhin erwähnten Drehzahlsensoren 123 bzw. 124 erkannt.

Bei einer Prüfung der Dichtheit des Sicherheitsauslassventils 117a wird beispielsweise das Auslassventil 115b geöffnet, während das entsprechende Einlassventil 114b offen bleibt. Bei einer Undichtigkeit am Sicherheitsauslassventil 117a erfolgt ein Abströmen des Druckmittels in die zugeordnete Kammer 12a des Druckmittelvorratsbehälters 12, so dass der dadurch verursachte Druckmittelverlust von der elektrohydraulischen Druckbereitstellungseinrichtung 50 nachgefördert werden muss. Die Nachförderung des Druckmittelvolumens wird indirekt am elektrohydraulischen Aktuator 50 aus dem vom Wegsensor 148 erfassten Weg des Kolbens 46 ermittelt.

Die gleiche Vorgehensweise gilt selbstverständlich auch für das andere Ein- und Auslassventilpaar 114a, 115a.

## Patentansprüche

1. Verfahren zum Betrieb einer schlupfgeregelten hydraulischen Fahrzeugbremsanlage mit einer elektrohydraulischen Radbremsdruckmodulationseinheit, die sowohl Einals auch Auslassventile (14a-d, 114a-b; 15a-d, 115a-b) umfasst, einem einen Druckmittelvorratsbehälter (12) aufweisenden, mittels eines Bremspedals (9) betätigbaren Hauptbremszylinder (11), an den Bremskreise (I, II) angeschlossen sind, mit an die Bremskreise (I, II) über die Einlassventile (14a-d, 114a-b) angeschlossenen Radbremsen (3, 4, 5, 6) sowie mit den an die Radbremsen (3, 4, 5, 6) angeschlossenen Auslassventilen (15a-d, 115a-b), wobei die Ausgänge der Auslassventile (15a-d, 115a-b) eines Bremskreises (I, II) mittels eines gemeinsam genutzten hydraulischen Leitungsabschnitts (16a, 16b) zusammen geschaltet sind, **dadurch gekennzeichnet, dass** zum Prüfen der Dichtheit der Auslassventile (15a-d; 115a-b) sowie eines mit dem Leitungsabschnitt (16a, 16b) verbundenen Sicherheitsauslassventils (17a, 17b; 117a, 117b) eines Bremskreises (I, II) während eines Bremsvorgangs die Auslass- (15a-d; 115a-d) sowie das Sicherheitsauslassventil (17a, 17b; 117a, 117b) einzeln und zeitversetzt geöffnet werden und dass die damit verbundenen Reaktionen des Bremssystems und/oder des Fahrzeugs überwacht werden.

2. Verfahren nach Anspruch 1, **dadurch gekennzeichnet, dass** beim Ausbleiben einer Reaktion auf das einzelne und zeitversetzte Öffnen der Auslass- (15a-d; 115a-b) sowie des Sicherheitsauslassventils (17a, 17b; 117a, 117b) eines Bremskreises (I, II) auf die Dichtheit der beteiligten Ventile geschlossen wird.

3. Verfahren nach Anspruch 1, **dadurch gekennzeichnet, dass** mit Hilfe eines Wegsensors (48, 148) ein in Bezug zum Hauptbremszylinderdruck übermäßiger Volumenverbrauch festgestellt und, wenn dieser vorliegt, auf ein undichtes Auslassventil und/oder Sicherheitsauslassventil geschlossen wird.

4. Verfahren nach Anspruch 1 zum Betrieb einer Fahrzeugbremsanlage, in welcher der Ausgangsanschluss des Sicherheitsauslassventils mit einem Niederdruckspeicher (18a, 18b) oder mit einer dem Bremskreis (I, II) zugeordneten Kammer (12a, 12b) des Druckmittelvorratsbehälters (12) verbunden ist, **dadurch gekennzeichnet, dass** das einzelne und zeitversetzte Öffnen der Auslassventile (15a-d) sowie des Sicherheitsauslassventils (17a, 17b) während einer Druckhaltephase durchgeführt wird und gleichzeitig wenigstens ein Einlassventil (14a-d) geschlossen wird, wobei beim Nachlassen eines Radbremsdrucks bzw. einer Radbremswirkung auf eine Undichtigkeit eines geschlossenen Auslass- (15a-d) bzw. des Sicherheitsauslassventils (17a, 17b) geschlossen wird.

5. Verfahren nach Anspruch 1 zum Betrieb einer Fahrzeugbremsanlage, welche als eine Bremsanlage vom Typ "Brake-by-wire" ausgebildet ist, **dadurch gekennzeichnet, dass** das einzelne und zeitversetzte Öffnen der Auslassventile (115a, 115b) sowie des Sicherheitsauslassventils (117a, 117b) mit offenen Einlassventilen (114a, 114b) durchgeführt wird und der VolumenVerbrauch der "Brake-by-wire"-Bremsanlage an Druckmittel zur Aufrechterhaltung der Bremswirkung mit Hilfe eines Betätigungswegsensors (148) überwacht wird und bei einem Druckmittelverlust auf eine Undichtigkeit eines geschlossenen Auslass- (115a, 115b) bzw. Sicherheitsauslassventils (117a) geschlossen wird.

6. Verfahren nach einem der Ansprüche 4 oder 5, **dadurch gekennzeichnet, dass** zur Überprüfung der Dichtheit der Auslassventile (115a, 115b) das Sicherheitsauslassventil (117a) geöffnet wird.

7. Verfahren nach Anspruch 6, **dadurch gekennzeichnet, dass** bei erkannter Undichtigkeit eines der Auslassventile (115a, 115b) durch ein zeitversetztes Schließen der Einlassventile (114a, 114b) das undichte Auslassventil (115a, 115b) ermittelt wird.

8. Verfahren nach einem der Ansprüche 4 oder 5, **dadurch gekennzeichnet, dass** zur Überprüfung der Dichtheit des Sicherheitsauslassventils (117a) eines der Auslassventile (115a, 115b) geöffnet wird.

9. Schlupfgeregelte hydraulische Fahrzeugbremsanlage mit einer elektrohydraulischen Radbremsdruckmodulationseinheit, die sowohl Ein- als auch Auslassventile (14a-d, 114a-b; 15a-d, 115a-b) umfasst, einem einen Druckmittelvorratsbehälter (12) aufweisenden, mittels eines Bremspedals (9) betätigbaren Hauptbremszylinder (11), an den Bremskreise (I, II) angeschlossen sind, mit an die Bremskreise (I, II) über die Einlassventile (14a-d, 114a-b) angeschlossenen Radbremsen (3, 4, 5, 6) sowie mit den an die Radbremsen (3, 4, 5, 6) angeschlossenen Auslassventilen (15a-d, 115a-b), wobei die Ausgänge der Auslassventile (15a-d, 115a-b) eines Bremskreises (I, II) mittels eines gemeinsam genutzten hydraulischen Leitungsabschnitts (16a, 16b) zusammen geschaltet sind, wobei ein Sicherheitsauslassventil (17a, 117a; 17b, 117b) vorgesehen ist, mit dem ein Abströmen von Druckmittel aus dem Leitungsabschnitt (16a, 16b) über einen Ausgangsanschluss des Sicherheitsauslassventils (17a, 117a; 17b, 117b) freigebbar ist, **dadurch gekennzeichnet, dass** in dieser ein Verfahren nach einem der Ansprüche 1 bis 3 durchgeführt wird.

10. Fahrzeugbremsanlage nach Anspruch 9, **dadurch gekennzeichnet, dass** der Ausgangsanschluss des Sicherheitsauslassventils (17a, 17b) mit einem Niederdruckspeicher (18a, 18b) verbunden ist.

11. Fahrzeugbremsanlage nach Anspruch 9, **dadurch gekennzeichnet, dass** der Ausgangsanschluss des Sicherheitsauslassventils (117a, 117b) mit einer dem Bremskreis (I, II) zugeordneten Kammer (12a, 12b) des Druckmittelvorratsbehälters (12) verbunden ist.

12. Fahrzeugbremsanlage nach Anspruch 9 oder 11, **dadurch gekennzeichnet, dass** die Fahrzeugbremsanlage als eine Bremsanlage vom Typ "Brake-by-wire" ausgebildet ist.

13. Fahrzeugbremsanlage nach Anspruch 12, **dadurch gekennzeichnet, dass** zwischen dem Bremspedal (9) und dem Hauptbremszylinder (11) eine hydraulische Pedalentkopplungseinheit (30) angeordnet ist.

14. Fahrzeugbremsanlage nach Anspruch 13, **dadurch gekennzeichnet, dass** die Pedalentkopplungseinheit (30) mit einer elektrisch steuerbaren Druckbereitstellungseinrichtung (50) zusammen wirkt.

15. Fahrzeugbremsanlage nach Anspruch 13 oder 14, **dadurch gekennzeichnet, dass** die Pedalentkopplungseinheit (30) eine hydraulisch betätigbare Wegsimulationseinrichtung (36) umfasst.

## Claims

1. Method for operating a hydraulic vehicle brake system with slip regulation, having an electrohydraulic wheel brake pressure modulation unit which comprises both inlet and also outlet valves (14a-d, 114a-b; 15a-d, 115a-b), having a master brake cylinder (11) which has a pressure medium storage reservoir (12) and which can be actuated by means of a brake pedal (9) and to which brake circuits (I, II) are connected, having wheel brakes (3, 4, 5, 6) which are connected to the brake circuits (I, II) via the inlet valves (14a-d, 114a-b), and having the outlet valves (15a-d, 115a-b) which are connected to the wheel brakes (3, 4, 5, 6), wherein the outlets of the outlet valves (15a-d, 115a-b) of a brake circuit (I, II) are connected to one another by means of a jointly used hydraulic line section (16a, 16b), **characterized in that**, to check the leak-tightness of the outlet valves (15a-d; 115a-b) and of a safety outlet valve (17a, 17b; 117a, 117b), which is connected to the line section (16a, 16b), of a brake circuit (I, II) during a braking process, the outlet valve (15a-d; 115a-b) and the safety outlet valve (17a, 17b; 117a, 117b) are opened individually and in a time-offset manner, and **in that** the associated reactions of the brake system and/or of the vehicle are monitored.

2. Method according to Claim 1, **characterized in that**, in the absence of a reaction to the individual and time-offset opening of the outlet valve (15a-d; 115a-b) and of the safety outlet valve (17a, 17b; 117a, 117b) of a brake circuit (I, II), it is inferred that the valves in question do not have a leak.

3. Method according to Claim 1, **characterized in that**, by means of a travel sensor (48, 148), an excessive volume consumption in relation to the master brake cylinder pressure is detected and, if present, it is inferred that the outlet valve and/or safety outlet valve has a leak.

4. Method according to Claim 1 for operating a vehicle brake system in which the outlet port of the safety outlet valve is connected to a low-pressure accumulator (18a, 18b) or to a chamber (12a, 12b), which is assigned to the brake circuit (I, II), of the pressure medium storage reservoir (12), **characterized in that** the individual and time-offset opening of the outlet valves (15a-d) and of the safety outlet valve (17a, 17b) is carried out during a pressure-holding phase, and at the same time at least one inlet valve (14a-d) is closed, wherein if a wheel brake pressure or a wheel brake action decreases, it is inferred that a closed outlet valve (15a-d) or the safety outlet valve (17a, 17b) has a leak.

5. Method according to Claim 1 for operating a vehicle brake system which is designed as a "brake-by-wire"-type brake system, **characterized in that** the individual and time-offset opening of the outlet valves (115a, 115b) and of the safety outlet valve (117a, 117b) is carried out with inlet valves (114a, 114b) open, and the pressure medium volume consumption of the "brake-by-wire" brake system in order to maintain the braking action is monitored by means of an actuation travel sensor (148), and in the event of a loss of pressure medium, it is inferred that a closed outlet valve (115a, 115b) or safety outlet valve (117a) has a leak.

6. Method according to either of Claims 4 and 5, **characterized in that**, to check the leak-tightness of the outlet valves (115a, 115b), the safety outlet valve (117a) is opened.

7. Method according to Claim 6, **characterized in that**, if a leak of one of the outlet valves (115a, 115b) is detected, the outlet valve (115a, 115b) with a leak is determined by means of a time-offset closure of the inlet valves (114a, 114b).

8. Method according to either of Claims 4 and 5, **characterized in that**, to check the leak-tightness of the safety outlet valve (117a), one of the outlet valves (115a, 115b) is opened.

9. Hydraulic vehicle brake system with slip regulation, having an electrohydraulic wheel brake pressure modulation unit which comprises both inlet and also outlet valves (14a-d, 114a-b, 15a-d, 115a-b), having a master brake cylinder (11) which has a pressure medium storage reservoir (12) and which can be actuated by means of a brake pedal (9) and to which brake circuits (I, II) are connected, having wheel brakes (3, 4, 5, 6) which are connected to the brake circuits (I, II) via the inlet valves (14a-d, 114a-b), and having outlet valves (15a-d, 115a-b) which are connected to the wheel brakes (3, 4, 5, 6), wherein the outlets of the outlet valves (15a-d, 115a-b) of a brake circuit (I, II) are connected to one another by means of a jointly used hydraulic line section (16a, 16b), wherein a safety outlet valve (17a, 117a; 17b, 117b) is provided by means of which an outflow of pressure medium out of the line section (16a, 16b) via an outlet port of the safety outlet valve (17a, 117a; 17b, 117b) can be enabled, **characterized in that**, in said brake system, a method according to any of Claims 1 to 3 is carried out.

10. Vehicle brake system according to Claim 9, **characterized in that** the outlet port of the safety outlet valve (17a, 17b) is connected to a low-pressure accumulator (18a, 18b).

11. Vehicle brake system according to Claim 9, **characterized in that** the outlet port of the safety outlet valve (117a, 117b) is connected to a chamber (12a, 12b), which is assigned to the brake circuit (I, II), of the pressure medium storage reservoir (12).

12. Vehicle brake system according to Claim 9 or 11, **characterized in that** the vehicle brake system is designed as a "brake-by-wire"-type brake system.

13. Vehicle brake system according to Claim 12, **characterized in that** a hydraulic pedal decoupling unit (30) is arranged between the brake pedal (9) and the master brake cylinder (11).

14. Vehicle brake system according to Claim 13, **characterized in that** the pedal decoupling unit (30) interacts with an electrically controllable pressure provision device (50).

15. Vehicle brake system according to Claim 13 or 14, **characterized in that** the pedal decoupling unit (30) comprises a hydraulically actuable travel simulation device (36).

## Revendications

1. Procédé d'utilisation d'un système de freinage de véhicule hydraulique à régulation de glissement avec une unité de modulation de pression de frein de roue électrohydraulique, comprenant des soupapes d'admission que d'échappement (14a-d, 114a-b ; 15a-d, 115a-b), avec un maître-cylindre de frein (11) comportant un réservoir de moyen de pression (12) actionnable à l'aide d'une pédale de frein (9), au niveau duquel les circuits de freinage (I, II) sont raccordés, avec des freins de roue (3, 4, 5, 6) raccordés aux circuits de freinage (I, II) via les soupapes d'admission (14a-d, 114a-b) ainsi qu'avec les soupapes d'échappement (15ad, 115a-b) raccordées aux freins de roue (3, 4, 5, 6), les sorties des soupapes d'échappement (15a-d, 115a-b) d'un circuit de freinage (I, II) étant connectées ensemble à l'aide d'une section de conduite hydraulique (16a, 16b) utilisée en commun, **caractérisé en ce que** pour contrôler l'étanchéité des soupapes d'échappement (15a-d ; 115a-b) ainsi que d'une soupape d'échappement de sécurité (17a, 17b ; 117a, 117b) reliée à la section de conduite (16a, 16b) d'un circuit de freinage (I, II) pendant un processus de freinage, la soupape d'échappement (15a-d ; 115a-b) ainsi que la soupape d'échappement de sécurité (17a, 17b ; 117a, 117b) sont ouvertes individuellement et de façon décalée dans le temps et que les réactions ainsi reliées du système de freinage et/ou du véhicule sont surveillées.

2. Procédé selon la revendication 1, **caractérisé en ce que** en l'absence de réaction à l'ouverture individuelle et décalée dans le temps de la soupape d'échappement (15a-d ; 115a-b) ainsi que de la soupape d'échappement de sécurité (17a, 17b ; 117a, 117b) d'un circuit de freinage (I, II), on en déduit l'étanchéité des soupapes concernées.

3. Procédé selon la revendication 1, **caractérisé en ce qu'**une consommation de volume excessive par rapport à la pression de maître-cylindre de frein est établie à l'aide d'un capteur de course (48, 148) et qu'on en déduit la présence d'une soupape d'échappement et/ou d'une soupape d'échappement de sécurité non étanche.

4. Procédé selon la revendication 1 pour l'utilisation d'un système de frein de véhicule dans lequel le raccord de sortie de la soupape d'échappement de sécurité est relié à un accumulateur de basse pression (18a, 18b) ou à une chambre (12a, 12b) associé au circuit de freinage (I, II) du réservoir de moyen de pression (12), **caractérisé en ce que** l'ouverture individuelle et décalée dans le temps des soupapes d'échappement (15a-d) ainsi que de la soupape d'échappement de sécurité (17a, 17b) est réalisée pendant une phase de maintien de pression et simultanément qu'au moins une soupape d'admission (14ad) est fermée, sachant qu'on déduit de l'absence d'étanchéité d'une soupape d'échappement (15a-d) et/ou d'une soupape d'échappement de sécurité (17a, 17b) lors de la diminution d'une pression de frein de roue et/ou d'un effet de frein de roue.

5. Procédé selon la revendication 1 pour l'utilisation d'un système de frein de véhicule, ledit système étant réalisé sous la forme d'un système de freinage du type « frein par câble », **caractérisé en ce que** l'ouverture individuelle et décalée dans le temps des soupapes d'échappement (115a, 115b) ainsi que de la soupape d'échappement de sécurité (117a, 117b) est réalisée avec les soupapes d'admission (114a, 114b) ouvertes et que la consommation volumique du système de freinage de « frein par câble » est surveillée au moyen de pression de maintien de l'effet de frein à l'aide d'un capteur de course d'actionnement (148) et qu'on en déduit, en cas de perte de moyen de pression, à une absence d'étanchéité d'une soupape d'échappement (115a, 115b) et/ou d'une soupape d'échappement de sécurité (117a) fermée.

6. Procédé selon l'une quelconque des revendications 4 ou 5, **caractérisé en ce que** la soupape d'échappement de sécurité (117a) est ouverte pour contrôler l'étanchéité des soupapes d'échappement (115a, 115b).

7. Procédé selon la revendication 6, **caractérisé en ce que** la soupape d'échappement (115a, 115b) est déterminée, en cas d'absence d'étanchéité détectée d'une des soupapes d'échappement (115a, 115b), par le biais d'une fermeture décalée dans le temps des soupapes d'admission (114a, 114b).

8. Procédé selon l'une quelconque des revendications 4 ou 5, **caractérisé en ce qu'**une ouverture est réalisée pour surveiller l'étanchéité de la soupape d'échappement de sécurité (117a) d'une des soupapes d'échappement (115a, 115b).

9. Système de freinage de véhicule hydraulique à régulation de glissement avec une unité de modulation de pression de frein de roue électrohydraulique, comprenant des soupapes d'admission que d'échappement (14a-d, 114a-b ; 15a-d, 115a-b), avec un maître-cylindre de frein (11) comportant un réservoir de moyen de pression (12) actionnable à l'aide d'une pédale de frein (9), au niveau duquel les circuits de freinage (I, II) sont raccordés, avec des freins de roue (3, 4, 5, 6) raccordés aux circuits de freinage (I, II) via les soupapes d'admission (14a-d, 114a-b) ainsi qu'avec les soupapes d'échappement (15a-d, 115a-b) raccordées aux freins de roue (3, 4, 5, 6), les sorties des soupapes d'échappement (15a-d, 115a-b) d'un circuit de freinage (I, II) étant connectées ensemble à l'aide d'une section de conduite hydraulique (16a, 16b) utilisée en commun, une soupape d'échappement de sécurité (17a, 117a; 17b , 117b) étant prévue avec laquelle un écoulement de moyen de pression peut être libéré hors de la section de conduite (16a, 16b) via un raccord de sortie de la soupape d'échappement de sécurité (17a, 117a ; 17b, 117b), **caractérisé en ce qu'**un procédé selon l'une quelconque des revendications 1 à 3 est mis en oeuvre dans celle-ci.

10. Système de frein de véhicule selon la revendication 9, **caractérisé en ce que** le raccord de sortie de la soupape d'échappement de sécurité (17a, 17b) est relié à un accumulateur de basse pression une chambre (12a, 12b) associée au circuit de freinage (I, II) du réservoir de moyen de pression (12).

11. Système de frein de véhicule selon la revendication 9, **caractérisé en ce que** le raccord de sortie de la soupape d'échappement de sécurité (117a, 117b) est relié avec une chambre (12a, 12b) associée au circuit de freinage (I, II) du réservoir de moyen de pression (12).

12. Système de frein de véhicule selon la revendication 9 ou 11, **caractérisé en ce que** le système de frein de véhicule est réalisé sous la forme d'un système de freinage du type « frein par câble ».

13. Système de frein de véhicule selon la revendication 12, **caractérisé en ce qu'**une unité de découplage de pédale hydraulique (30) est disposée entre la pédale de frein (9) et le maître-cylindre de frein (11).

14. Système de frein de véhicule selon la revendication 13, **caractérisé en ce que** l'unité de découplage de pédale (30) agit conjointement avec un dispositif de mise sous pression de pression (50) électriquement commandable.

15. Système de frein de véhicule selon la revendication 13 ou 14, **caractérisé en ce que** l'unité de découplage de pédale (30) comprend un dispositif de simulation course (36) actionnable de façon hydraulique.
